# EUROPÄISCHE PATENTSCHRIFT

(11) **EP 0 457 231 B1**
(45) Veröffentlichungstag und Bekanntmachung des Hinweises auf die Patenterteilung: **07.09.1994**
(21) Anmeldenummer: 91107696.6
(22) Anmeldetag: 13.05.1991
(51) Int. Cl.: G01M 3/32

(54) **Leckagesonde für Flüssigkeiten**
Fluid leak detecting probe
Sonde de détection de fuites de liquide

(30) Priorität: 15.05.1990 DE 9005509 U
(43) Veröffentlichungstag der Anmeldung: 21.11.1991
(73) Patentinhaber: ELB-Füllstandsgeräte Bundschuh GmbH + Co., D-64625 Bensheim (DE)
(72) Erfinder: Bundschuh, Karl-Hans, D-6140 Bensheim 1 (DE)
(74) Vertreter: Helber, Friedrich G., Dipl.-Ing.

(56) Entgegenhaltungen:
- DE-A- 3 203 840
- DE-U- 8 710 383
- DE-U- 8 902 770
- FR-A- 1 548 526

## Beschreibung

Die Erfindung betrifft eine Leckagesonde, die im Zwischenraum zwischen der Außenseite eines eine zu überwachende Flüssigkeit aufnehmenden Behälters und der Innenseite eines den Behälter umgebenden Auffangbehälters positionierbar ist und nach dem Schwimmer-Prinzip arbeitet, mit einem in den Zwischenraum einbringbaren, in der positionierten Endlage senkrechten Sondenrohr, in dessen Innern wenigstens ein magnetisch betätigbares Schaltelement angeordnet ist, welches Teil einer elektrischen Überwachungsschaltung ist und mit wenigstens einem auf oder neben dem Sondenrohr verschiebbar geführten, einen Schaltmagneten enthaltenden Schwimmer, der bei auftretender Behälter-Leckage auf der austretenden Leckflüssigkeit aufschwimmt und bei Erreichen einer vorgegebenen Höhe des Spiegels der Leckflüssigkeit im Zwischenraum den Schaltzustand des Schaltelements ändert und dadurch in der Überwachungsschaltung ein Warnsignal auslöst, wobei das Sondenrohr eine gegenüber der in senkrechter Richtung gemessenen Höhe des Zwischenraums vergleichsweise geringe, für die Führung des Schwimmers bis in eine das elektrische Schaltelement auslösende Aufschwimmstellung jedoch hinreichende Länge hat, und aus dem oberen Ende des Sondenrohrs ein die elektrischen Anschlußleitungen für das bzw. die Schaltelement(e) enthaltendes, aus einer Öffnung an der Oberseite des Zwischenraums herausführbares Kabel abgedichtet und zugentlastet herausgeführt ist.

Leckagesonden dienen zur Überwachung von Behältern oder Tanks, die zur Aufnahme von Flüssigkeiten, und zwar insbesondere umweltunverträglichen Flüssigkeiten, vorgesehen sind, auf Dichtigkeit. Solche Behälter müssen in einer Auffangwanne oder einem Auffangbehälter angeordnet werden, in den die zu überwachende Flüssigkeit bei einem eventuellen Undichtwerden des eigentlichen Behälters austritt. Die Abmessungen der Auffangbehälter in bezug auf die Außenabmessungen der eigentlichen Behälter ist dabei - zumindest für solche Behälter, die für die Lagerung bestimmter Flüssigkeiten bestimmt sind - vorgegeben, wobei nach einer Vorschrift zwischen der Außenfläche des Behälters und der Innenfläche des Überbehälters ein Abstand von 100mm nicht unterschritten werden soll.

Als zusätzliche Forderung besteht dann die Vorschrift, daß der den zwischen dem Behälter und dem Überbehälter gebildete Zwischenraum im Bodenbereich eine nicht von Schweißnähten oder anderen Unregelmäßigkeiten beeinträchtigte ebene Fläche mit einer radialen Erstreckung von wenigstens 50mm hat. Leckagesonden müssen nun also in diesem Zwischenraum angeordnet werden und sollen melden, wenn bei Undichtwerden des Behälters die zu überwachende Flüssigkeit in den Zwischenraum übertritt, damit dann unverzüglich entsprechende Gegenmaßnahmen eingeleitet werden können. Dabei ist eine Forderung, daß die Leckagesonde bereits bei relativ geringen, in den Zwischenraum übergetretenen Flüssigkeitsmengen anspricht. Für Leckagesonden nach dem bisher insbesondere bei Überfüllsicherungen angewandten Schwimmer-Prinzip der eingangs erwähnten Art besteht dann also die Forderung, daß der den Schaltmagnet enthaltende Schwimmer das im Sondenrohr enthaltene elektrische Schaltelement bereits nach nur geringer Aufschwimmhöhe auslöst.

Bei nach dem Schwimmer-Prinzip arbeitenden Überfüllsicherungen (DE-GM 89 01 091) wird das den Schwimmer mit dem Schaltmagneten führende und das bzw. die Schaltelemente enthaltende Sondenrohr durch die Deckwand des Behälters hindurchgeführt, wobei die Einführtiefe des Sondenrohrs so bestimmt wird, daß der Schwimmer gerade dann in die das Schaltelement auslösende Stellung aufschwimmt, wenn der gewünschte - zu begrenzende - Füllstand im Behälter erreicht ist. Bei Anwendung derartiger Überfüllsicherungen als Leckagesonden müßte das Sondenrohr im zu überwachenden Zwischenraum zwischen dem Behälter und dem Überbehälter also bis zum Boden des Zwischenraums abgesenkt werden, was - wenn schon nicht unmöglich - doch außerordentlich problematisch wäre, weil die Flüssigkeitsbehälter und somit auch dieser Zwischenraum oft erhebliche Höhe in der Größenordnung von mehreren Metern haben. Ein Sondenrohr solcher Länge ist außerordentlich biegeweich, so daß die Montage derart, daß gewährleistet ist, daß der Schwimmer nicht seitlich am Behälter oder der Innenfläche des Überbehälters anstößt, oder auch das Sondenrohr nicht vollständig senkrecht verläuft und somit das leichte Aufschwimmen des Schwimmers behindert, schwierig ist. Oft ist die Montage eines derart langen Sondenrohrs auch schon aus dem Grund nicht möglich, weil oberhalb des Behälters kein hinreichender freier Raum zur Verfügung steht, um das bei der Montage senkrecht zu haltende Sondenrohr aufzunehmen.

Mit einem kürzeren Sondenrohr kommen Leckagesonden der eingangs erwähnten Art aus, deren Montage an dem auch die elektrischen Anschlußleitungen enthaltenden abgedichtet und zugentlastet aus dem oberen Ende des Sondenrohrs herausgeführten Kabel hängend durch eine Einführöffnung in der Oberseite des Auffangbehälters hindurch erfolgt. Bei diesen bekannten Leckagesonden sind Sondenrohr und Schwimmer in einer umschließenden Hülse (DE-U-8902770) oder einem allseits geschlossenen Topf (DE-U-8710383) eingesetzt, wobei das Sondenrohr jeweils an seinem oberen Ende in einem die Hülse oben abschließenden massiven Grundkörper bzw. der Deckplatte des Topfs verschraubt ist. Der Massenschwerpunkt dieser bekannten Leckagesonden liegt aufgrund ihrer Ausgestaltung oberhalb des Aufschwimmschwerpunkts des Schwimmers, so daß unter ungünstigen Umständen, z.B. bei sehr schnell steigendem Spiegel der Leckflüssigkeit, ein Umkippen der Leckagesonden auftreten kann. Der Schwimmer kann dann auf dem ihn führenden Sondenrohr nicht mehr verschoben werden und die Entwicklung eines Warnsignals ist nicht mehr gewährleistet. Aufgrund des nur geringen zur Verfügung stehenden Zwischenraums zwischen dem Behälter und dem Auffangbehälter führt die Anordnung des Schwimmers innerhalb eines umschließenden Topfs oder Gehäuses zwangsläufig zu einer Verkleinerung von dessen Durchmesser und somit einer Verringerung seines Auftriebs. D.h. die Ansprechempfindlichkeit wird verringert.

Der Erfindung liegt daher die Aufgabe zugrunde, eine nach dem Schwimmer-Prinzip arbeitende Leckagesonde anzugeben, welche ohne Schwierigkeiten im Zwischenraum zwischen einem mit der zu überwachenden Flüssigkeit gefüllten Behälter und einem Auffangbehälter montierbar ist und der bei hoher Ansprechempfindlichkeit eine auch bei starkem Anfall von Leckageflüssigkeit sichere Meldefunktion erbringt, d.h. bereits bei niedriger Aufschwimmhöhe des Schwimmers das Leck-Warnsignal entwickelt.

Ausgehend von einer Leckagesonde der eingangs erwähnten Art wird diese Aufgabe erfindungsgemäß dadurch gelöst, daß das Sondenrohr an seinem dem Boden des Zwischenraums zugewandten Ende form- oder kraftschlüssig, jedoch vom Boden abhebbar gehaltert ist. Durch die Halterung des den Schwimmer führenden Sondenrohrs an seinem dem Auffangbehälter-Boden zugewandten Ende wird der Massenschwerpunkt der Sonde unter den des Aufschwimmschwerpunkts gelegt und so einem unkontrollierten Kippen der Sonde vorgebeugt. Der Schwimmer kann durch den Wegfall eines umschließenden Gehäuses mit für die gegebenen Einbaubedingungen maximaler Schwimmerfläche ausgelegt werden.

Wenn der Zwischenraum - wie in der Regel üblich - an der Oberseite verschlossen ist und in der verschlossenen Deckwand des Zwischenraums nur eine Öffnung vorgesehen ist, wird der größte Durchmesser des Schwimmers geringfügig kleiner als die Öffnung an der Oberseite des Zwischenraums bemessen.

Am bodenseitigen Ende des Sondenrohrs wird in einer bevorzugten Ausführungsform der Erfindung eine ebenflächige Standplatte angeordnet, deren Durchmesser ebenfalls geringfügig kleiner als die Öffnung an der Oberseite des Zwischenraums bemessen ist. Die Leckagesonde wird in diesem Fall also nach dem Ablassen bis zum Boden des Zwischenraums einfach auf dieser Standplatte aufsitzend gehaltert und ist jederzeit wieder durch Hochziehen mittels des Kabels zu Wartungs- und Überprüfungszwecken herausnehmbar.

Alternativ kann das bodenseitige Ende des Sondenrohrs auch in eine auf dem Boden des Zwischenraums befestigte Halterung einsetzbar sein, wobei das Sondenrohr in der Halterung eingesetzt ist, um - ebenso wie beim vorherigen Ausführungsbeispiel - eine Demontage zum Zweck der Überprüfung oder Wartung zu ermöglichen.

Das Sondenrohr und der den Schaltmagneten enthaltende Schwimmer sowie gegebenenfalls am bodenseitigen Ende des Sondenrohrs vorgesehene Halterungseinrichtungen sind zweckmäßig aus Kunststoff hergestellt, wobei die verwendeten Kunststoffe insbesondere dann, wenn bestimmte aggressive, wassergefährdende Flüssigkeiten in Frage stehen, aus einer die Kunststoffe Polyethylen (HD-PE), Polypropylen (PP) und Polyvinylchlorid (PVC-U) enthaltenen Gruppe von Kunststoffen ausgewählt werden sollten, da diese Kunststoffe für die Verwendung bei Überfüllsicherungen für solche Flüssigkeiten inzwischen eine Zulassung erhalten haben, so daß diese Zulassung auch für die Verwendung bei Leckagesonden der hier in Frage stehenden Art gewährleistet ist.

Alternativ kann die Ausgestaltung so getroffen sein, daß das Sondenrohr und der den Schaltmagneten enthaltene Schwimmer sowie ggf. am bodenseitigen Ende des Sondenrohrs vorgesehene Halterungseinrichtungen aus unmagnetischem Metall hergestellt sind.

Der Schwimmer ist zweckmäßig als geschlossener Hohlkörper ausgebildet, wobei der Hohlraum zusätzlich ausgeschäumt sein kann, um ein Eindringen von Leckflüssigkeit ins Innere des Schwimmers auch dann zu verhindern, wenn der Schwimmer aus irgendeinem Grund undicht werden sollte.

Der Außendurchmesser des Schwimmers wird vorzugsweise in einem Bereich von 19 bis 100 mm und seine Höhe in einem Bereich von 25 bis 100 mm bemessen, wobei seine Wandstärke in einem Bereich von 0,1 bis 12 mm liegen kann.

Das Sondenrohr wird in bevorzugter Weiterbildung der Erfindung in seiner freien Länge so bemessen, daß es eine Aufschwimmhöhe des Schwimmers im Bereich von 10 bis 60 mm ermöglicht.

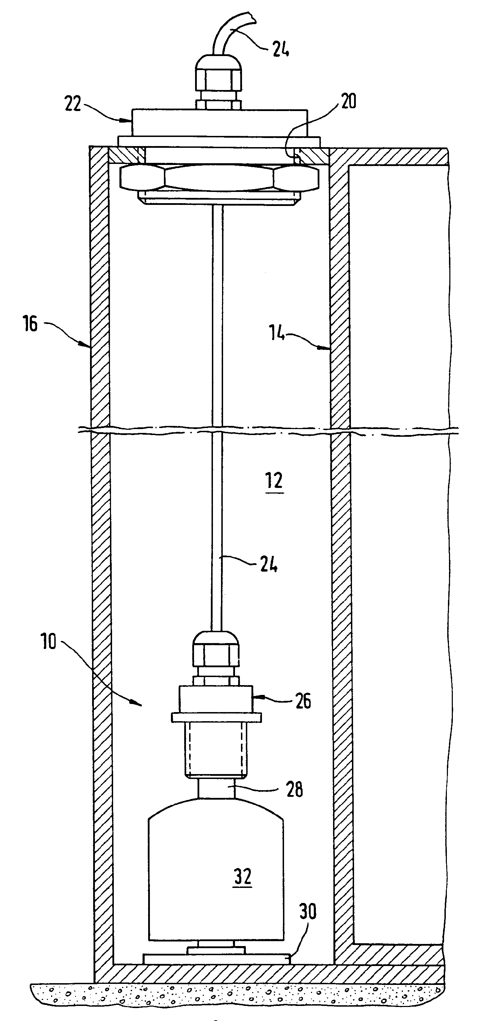

Die Erfindung ist in der folgenden Beschreibung eines Ausführungsbeispiels in Verbindung mit der Zeichnung näher erläutert, welche einen Längsmittelschnitt durch den äußeren Rand eines Behälters und dessen Auffangbehälter mit einer im Zwischenraum montierten nicht geschnittenen Leckagesonde zeigt.

Die in ihrer Gesamtheit mit 10 bezeichnete Leckagesonde ist im ringförmigen Zwischenraum 12 zwischen einem Lager-Behälter 14 für die Aufnahme einer - beispielsweise wassergefährdenden - Flüssigkeit und einem Auffang- oder Überbehälter 16 angeordnet. Beide Behälter 14, 16 mögen als aus Metallblech geschweißte zylindrische und konzentrisch ineinandergesetzte Behälter ausgebildet sein, wobei der Boden des Lager-Behälters 14 auf dem Boden des Auffangbehälters 16 aufsitzt. Der Zwischenraum 12 ist an der Oberseite durch eine eingesetzte, komplementär ringförmige Platte verschlossen, die - für die Montage der Leckagesonde 10 - eine mit Gewinde versehene Öffnung 20 aufweist, deren Durchmesser so gewählt ist, daß die Leckagesonde 10 durch sie hindurchführbar ist. Die Öffnung 20 ist durch eine Verschlußarmatur 22 verschlossen, welche - abgedichtet - von einem biegsamen elektrischen Kabel 24 durchsetzt wird, dessen im Zwischenraum 12 liegendes unteres Ende - wiederum durch eine entsprechende Schraubarmatur 26 abgedichtet und zugentlastet - in das obere Ende eines Sondenrohrs 28 eingeführt ist. Die elektrischen Leitungen des Kabels 24 sind im Innern des Sondenrohrs 28 an ein oder mehrere (nicht gezeigte(s)) elektromagnetisch betätigtes Schaltelement bzw. Schaltelemente, beispielsweise einen oder zwei in Reihe geschaltete, aber auf gleicher Höhe angeordnete Reed-Kontakte angeschlossen, die Teil einer konventionellen elektrischen Warnschaltung sind, welche im vorliegenden Zusammenhang nicht näher beschrieben oder in der Zeichnung gezeigt wird.

Auf dem an seinem unteren Ende dicht verschlossenen und mit einer auf dem Boden des Zwischenraums 12 aufsitzenden Standplatte 30 versehenen Sondenrohr 28 ist ein einen (nicht gezeigten) Ringmagneten als magnetisches Betätigungselement für das bzw. die Schaltelement(e) im Sondenrohr 28 enthaltender Schwimmer 32 in senkrechter Richtung aufschwimmbar angeordnet, wobei das Sondenrohr 28 nur so lang bemessen ist, daß die freie Aufschwimmhöhe des Schwimmers 32 zwischen der untersten, standplattennahen Stellung und der maximalen oberen, an der Schraubarmatur 26 zur Anlage kommenden Aufschwimmhöhe gerade der zur Betätigung des bzw. der Schaltelemente(s) im Sondenrohr ausreicht. Wenn die Warnschaltung so getroffen ist, daß der im Innern des Sondenrohrs angeordnete Reed-Kontakt durch den Schaltmagneten des Schwimmers 32 geschlossen gehalten wird, so daß also ein Ruhe-Stromkreis geschlossen wird, ist die Länge des Sondenrohrs 28 mindestens solange bemessen, daß der Schwimmers beim Aufschwimmen auf in den Zwischenraum 12 übertretender Leckflüssigkeit in eine Höhe aufschwimmen kann, in welcher der Betätigungsmagnet den Reed-Kontakt - bzw. die parallel geschalteten Reed-Kontakte - nicht mehr geschlossen halten kann und der Ruhe-Stromkreis unterbrochen wird, was die Ausgabe eines Warnsignals durch die Überwachungsschaltung auslöst.

Es ist ersichtlich, daß im Rahmen des Erfindungsgedankens Abwandlungen und Weiterbildungen der beschriebenen Leckagesonde verwirklichbar sind, welche sich beispielsweise auf die Halterung des Sondenrohrs 28 am Boden des Zwischenraums beziehen. So ist beispielsweise denkbar, daß anstelle einer am Sondenrohr 28 befestigten Standplatte 30 das (verschlossene) untere Ende des Sondenrohrs in eine auf dem Boden des Auffang- bzw. Überbehälters 16 im Bereich des Zwischenraums 12 angeordnete Halterung form- oder kraftschlüssig eingesetzt, zum Beispiel eingerastet oder in anderer Weise verriegelt wird.

## Patentansprüche

1. Leckagesonde (10) die im Zwischenraum (12) zwischen der Außenseite eines eine zu überwachende Flüssigkeit aufnehmenden Behälters (14) und der Innenseite eines den Behälter umgebenden Auffangbehälters (16) positionierbar ist und nach dem Schwimmer-Prinzip arbeitet, mit einem in den Zwischenraum (12) einbringbaren, in der positionierten Endlage senkrechten Sondenrohr (28), in dessen Innern wenigstens ein magnetisch betätigbares Schaltelement angeordnet ist, welches Teil einer elektrischen Überwachungsschaltung ist und mit wenigstens einem auf oder neben dem Sondenrohr (28) verschiebbar geführten, einen Schaltmagneten enthaltenden Schwimmer (32), der bei auftretender Behälter-Leckage auf der austretenden Leckflüssigkeit aufschwimmt und bei Erreichen einer vorgegebenen Höhe des Spiegels der Leckflüssigkeit im Zwischenraum (12) den Schaltzustand des Schaltelements ändert und dadurch in der Überwachdungsschaltung ein Warnsignal auslöst, wobei das Sondenrohr (28) eine gegenüber der in senkrechter Richtung gemessenen Höhe des Zwischenraums (12) vergleichsweise geringe, für die Führung des Schwimmers (32) bis in eine das elektrische Schaltelement auslösende Aufschwimmstellung jedoch hinreichende Länge hat, und aus dem oberen Ende des Sondenrohrs ein die elektrischen Anschlußleitungen für das bzw. die Schaltelelement(e) enthaltendes, aus einer Öffnung (20) an der Oberseite des Zwischenraums (12) herausführbares Kabel (24) abgedichtet und zugentlastet herausgeführt ist,
**dadurch gekennzeichnet**,
daß das Sondenrohr (28) an seinem dem Boden des Zwischenraums (12) zugewandten Ende form- oder kraftschlüssig, jedoch vom Boden abhebbar gehaltert ist.

2. Leckagesonde nach Anspruch 1, dadurch gekennzeichnet, daß der größte Durchmesser des Schwimmers (32) kleiner als die Öffnung (20) an der Oberseite des Zwischenraums (12) bemessen ist.

3. Leckagesonde nach Anspruch 1 oder 2, dadurch gekennzeichnet, daß am bodenseitigen Ende des Sondenrohrs (28) eine ebenflächige Standplatte (30) angeordnet ist, deren Durchmesser kleiner als die Öffnung (20) an der Oberseite des Zwischenraums (12) bemessen ist.

4. Leckagesonde nach Anspruch 1 oder 2, dadurch gekennzeichnet, daß das bodenseitige Ende des Sondenrohrs (28) in eine auf dem Boden des Zwischenraums (12) befestigte Halterung einsetzbar ist.

5. Leckagesonde nach einem der Ansprüche 1 bis 4, dadurch gekennzeichnet, daß das Sondenrohr (28) und der den Schaltmagneten enthaltende Schwimmer (32) sowie gegebenenfalls weitere am bodenseitigen Ende des Sondenrohrs (28) vorgesehene Halterungseinrichtungen aus Kunststoff hergestellt oder mit Kunststoff überzogen sind.

6. Leckagesonde nach Anspruch 5, dadurch gekennzeichnt, daß das Sondenrohr (28) und der den Schaltmagneten enthaltende Schwimmer (32) sowie gegebenenfalls das Sondenrohr aufnehmende Halterungseinrichtungen aus einem die Kunststoffe Polyehtylen (HD-PE), Polypropylen (PP) und Polyvinylchlorid (PVC-U) enthaltenden Gruppe von Kunststoffen hergestellt oder mit einem dieser Kunststoffe überzogen sind.

7. Leckagesonde nach einem der Ansprüche 1 bis 4, dadurch gekennzeichnet, daß das Sondenrohr (28) und der den Schaltmagneten enthaltende Schwimmer (32) sowie ggf. weitere am bodenseitigen Ende des Sondenrohrs (28) vorgesehene Halterungseinrichtungen aus unmagnetischem Metall hergestellt oder mit einem solchen Metall überzogen sind.

8. Leckagesonde nach einem der Ansprüche 1 bis 7, dadurch gekennzeichnet, daß der Schwimmer (32) als geschlossener Hohlkörper ausgebildet ist.

9. Leckagesonde nach Anspruch 8, dadurch gekennzeichnet, daß der Hohlraum des Schwimmers (32) ausgeschäumt ist.

10. Leckagesonde nach einem der Ansprüche 1 bis 7, dadurch gekennzeichnet, daß der Schwimmer (32) als leichter Vollkörper ausgebildet ist.

11. Leckagesonde nach einem der Ansprüche 8 bis 10, dadurch gekennzeichnet, daß der Schwimmer (32) einen Außendurchmesser im Bereich von 19 bis 100 mm hat.

12. Leckagesonde nach einem der Ansprüche 8 bis 11, dadurch gekennzeichnet, daß der Schwimmer (32) eine Höhe im Bereich von 25 bis 100 mm hat.

13. Leckagesonde nach einem der Ansprüche 8 bis 12, dadurch gekennzeichnet, daß der Schwimmer (32) eine Wandstärke im Bereich von 0,1 bis 12 mm hat.

14. Leckagesonde nach einem der Ansprüche 1 bis 13, dadurch gekennzeichnet, daß das Sondenrohr (28) eine eine Aufschwimmhöhe im Bereich von 10 bis 60 mm ermöglichende freie Länge hat.

## Claims

1. A leakage detector (10) positionable in the space (12) between the outside of a tank (14) containing a liquid for monitoring, and the inside of a collecting tank (16) surrounding the tank (14), said leakage detector operating on the float principle and comprising a detector tube (28) introducible into the space (12) between the two tanks and vertical after final positioning, the interior of said tube containing at least one magnetically actuatable circuit element forming part of an electrical monitoring circuit, and comprising at least one float (32) which is guided for displacement on or next to the detector tube (28), said float (32) containing a switching magnet and, in the event of tank leakage occurring, floating on the escaping leakage liquid and, when the level of leakage liquid in the inter-tank space (12) reaches a predetermined height, changing the state of actuation of the switching element and thus triggering a warning signal in the monitoring circuit, the detector tube (28) having a length which is comparatively small compared with the height of the inter-tank space (12) measured vertically, but sufficient to guide the float (32) into a floating position which triggers the electrical circuit element, a cable (24) which contains the electrical connecting leads for the or each circuit element and which is adapted to be taken out at the top of the inter-tank space (12) being taken out of the top end of the detector tube in sealed and tension-relieved relationship, characterised in that at its end facing the base of the inter-tank space (12) the detector tube (28) is mounted positively or non-positively but so as to be liftable from the base.

2. A leakage detector according to claim 1, characterised in that the maximum diameter of the float (32) is smaller than the opening (20) at the top of the inter-tank space (12).

3. A leakage detector according to claim 1 or 2, characterised in that a flat support plate (30) is disposed at the end of the detector tube (28) adjacent the base, the diameter of said support plate being smaller than the opening (20) at the top of the inter-tank space (12).

4. A leakage detector according to claim 1 or 2, characterised in that the end of the detector tube (28) adjacent the base is introducible into a holder secured to the base of the inter-tank space (12).

5. A leakage detector according to any one of claims 1 to 4, characterised in that the detector tube (28) and the float (32) containing the switching magnet, and any other holder means provided at the end of the detector tube (28) adjacent the base, are made from or coated with plastics.

6. A leakage detector according to claim 5, characterised in that the detector tube (28) and the float (32) containing the switching magnet, and any holder means receiving the detector tube, are made from a group of plastics comprising polyethylene (LDPE), polypropylene (PP) and polyvinylchloride (PVC-U) or are coated with one of these plastics.

7. A leakage detector according to any one of claims 1 to 4, characterised in that the detector tube (28) and the float (32) containing the switching magnet, and any other holding means provided at the end of the detector tube (28) adjacent the base are made from non-magnetic metal or are coated with such a metal.

8. A leakage detector according to any one of claims 1 to 7, characterised in that the float (32) is constructed as a closed hollow member.

9. A leakage detector according to claim 8, characterised in that the cavity of the float (32) is foam-filled.

10. A leakage detector according to any one of claims 1 to 7, characterised in that the float (32) is constructed as a lightweight solid element.

11. A leakage detector according to any one of claims 8 to 10, characterised in that the float (32) has an outside diameter in the range from 19 to 100 mm.

12. A leakage detector according to any one of claims 8 to 11, characterised in that the float (32) has a height in the range from 25 to 100 mm.

13. A leakage detector according to any one of claims 8 to 12, characterised in that the float (32) has a wall thickness in the range from 0.1 to 12 mm.

14. A leakage detector according to any one of claims 1 to 13, characterised in that the detector tube (28) has a free length allowing a floating height in the range from 10 to 60 mm.

## Revendications

1. Sonde de détection de fuite (10), pouvant être positionnée dans l'espace intermédiaire (12) situé entre le côté extérieur d'un récipient (14) recevant un liquide à surveiller et le côté intérieur d'un récipient de captage (16), entourant le récipient, et travaillant selon le principe du flotteur, avec un tube de sonde (28), orienté verticalement lorsqu'il est en position finale et pouvant être introduit dans l'espace intermédiaire (12), tube de sonde (28) à l'intérieur duquel est disposé au moins un élément de commutation à actionnement magnétique, faisant partie d'un circuit de surveillance électrique et avec au moins un flotteur (32), guidé déplaçable sur ou à côté du tube de sonde (28) et contenant un aimant de commutation, ce flotteur flottant sur le liquide de fuite s'échappant en cas d'apparition d'une fuite sur le récipient, et qui, lorsqu'est atteinte une hauteur prédéterminée du niveau du liquide de fuite dans l'espace intermédiaire (12), fait varier l'état de commutation de l'élément de commutation et déclenche de ce fait dans le circuit de surveillance un signal d'alarme, le tube de sonde (28) ayant une longueur relativement faible par rapport à la hauteur, mesurée dans la direction verticale, de l'espace intermédiaire (12), mais cependant suffisante pour permettre le guidage du flotteur (32) jusque dans une position de flottaison déclenchant l'élément de commutation électrique, et sortant de l'extrémité supérieure du tube de sonde, isolé de façon étanche et déchargé de toute traction, un câble (24), contenant les lignes de raccordement électriques destinées à l'élément ou aux éléments de commutation, pouvant être guidé hors d'une ouverture (20) ménagée en face supérieure de l'espace intermédiaire (12), caractérisée en ce que le tube de sonde (28) est maintenu, avec une liaison de forme ou une liaison mécanique, à son extrémité tournée vers le fond de l'espace intermédiaire (12), tout en étant susceptible d'être soulevé du fond.

2. Sonde de détection de fuite selon la revendication 1, caractérisée en ce que la diamètre maximal du flotteur (32) est inférieur à celui de l'ouverture (20) ménagée en face supérieure de l'espace intermédiaire (12).

3. Sonde de détection de fuite selon la revendication 1 ou 2, caractérisée en ce qu'une plaque de pose (30) plane, dont le diamètre est inférieur à celui de l'ouverture (20) ménagée en face supérieure de l'espace intermédiaire (12) est disposée à l'extrémité située côté fond, du tube de sonde (28).

4. Sonde de détection de fuite selon la revendication 1 ou 2, caractérisée en ce que l'extrémité côté fond du tube de sonde (28) peut être insérée dans une fixation fixée sur le fond de l'espace intermédiaire (12).

5. Sonde de détection de fuite selon l'une des revendications 1 à 4, caractérisée en ce que le tube de sonde (28) et le flotteur (32) contenant les aimants de commutation, ainsi que, le cas échéant, d'autres dispositifs de fixation prévus à l'extrémité côté fond du tube de sonde (28), sont en matière synthétique ou revêtus de matière synthétique.

6. Sonde de détection de fuite selon la revendication 5, caractérisée en ce que le tube de sonde (28) et le flotteur (32) contenant l'aimant de commutation, ainsi que, le cas échéant, les dispositifs de fixation recevant le tube de sonde, sont en une matière du groupe contenant les matières plastiques que sont le polyéthylène (PE haute pression), le polypropylène (PP) et le polychlorure de vinyle (PVC-U), ou en l'une de ces matières plastiques.

7. Sonde de détection de fuite selon l'une des revendications 1 à 4, caractérisée en ce que le tube de sonde (28) et le flotteur (32) contenant l'aimant permanent, ainsi que, le cas échéant, d'autres dispositifs de fixation prévus à l'extrémité située côté fond du tube de sonde (28), sont en un métal non magnétique ou revêtus d'un tel métal.

8. Sonde de détection de fuite selon l'une des revendications 1 à 7, caractérisée en ce que le flotteur (32) est réalisé sous forme de corps creux fermé.

9. Sonde de détection de fuite selon la revendication 8, caractérisée en ce que l'espace creux du flotteur (32) est rempli d'un matériau alvéolaire.

10. Sonde de détection de fuite selon l'une des revendications 1 à 7, caractérisée en ce que le flotteur (32) est réalisé sous forme de corps plein léger.

11. Sonde de détection de fuite selon l'une des revendications 8 à 10, caractérisée en ce que le flotteur (32) a un diamètre extérieur compris dans la plage allant de 19 à 100 mm.

12. Sonde de détection de fuite selon l'une des revendications 8 à 11, caractérisée en ce que le flotteur (32) a une hauteur comprise dans la plage allant de 25 à 100 mm.

13. Sonde de détection de fuite selon l'une des revendications 8 à 12, caractérisée en ce que le flotteur (32) a une épaisseur de paroi comprise dans la plage allant de 0,1 à 12 mm.

14. Sonde de détection de fuite selon l'une des revendications 1 à 13, caractérisée en ce que le tube de sonde (28) a une longueur libre permettant une hauteur de flottaison située dans la plage allant de 10 à 60 mm.
